# EUROPEAN PATENT APPLICATION

(11) **EP 2 640 135 A1**
(43) Date of publication of application: **18.09.2013**
(21) Application number: 11848203.3
(22) Date of filing: 16.12.2011
(51) Int. Cl.: H04W 52/02, H04W 52/34, H04W 52/14

(54) **METHOD FOR CONTROLLING BASE STATION POWER AND DEVICE**

(30) Priority: 17.12.2010 CN 201010594435
(71) Applicant: Huawei Technologies Co., Ltd., Shenzhen, Guangdong 518129 (CN)
(72) Inventor: ZHOU, Pengbin, Shenzhen Guangdong 518129 (CN)
(74) Representative: Thun, Clemens
(86) International application number: PCT/CN2011/084140
(87) International publication number: WO 2012/079535

(57) **Abstract**

The present invention discloses a method for controlling base station power and a network device. In the embodiments of the present invention, traffic volumes of a primary site and a secondary site associated with the primary site are acquired, and power of the secondary site associated with the primary site is controlled according to the traffic volumes, so that the power of base stations is controlled flexibly and that resources are utilized rationally.

## Description

This application claims priority to Chinese Patent Application No. 201010594435.5, filed with the Chinese Patent Office on December 17, 2010 and entitled "METHOD AND DEVICE FOR CONTROLLING BASE STATION POWER", which is incorporated herein by reference in its entirety.

### TECHNICAL FIELD

The present invention relates to the field of wireless communication technologies, and in particular, to a method and a device for controlling base station power.

### BACKGROUND

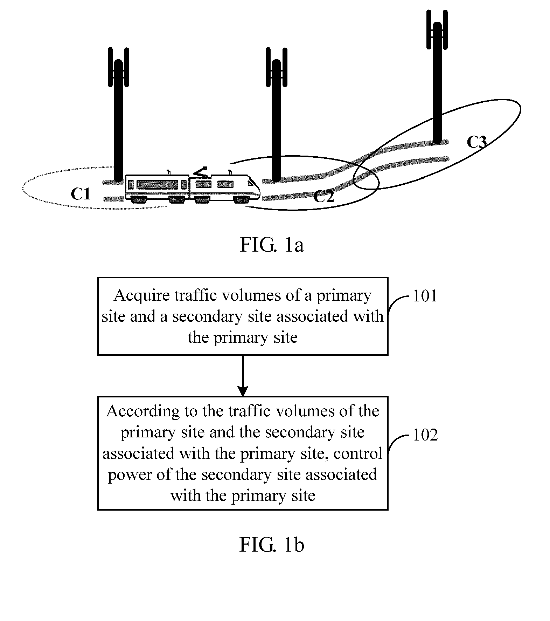

To solve communication in high-speed railway scenarios, base stations need to be installed along railways. As shown in FIG. 1a, base stations installed along railways are normally structured in a chain topology. In FIG. 1a, C1 represents a cell (cell) covered by base station 1, C2 represents a cell covered by base station 2, C3 represents a cell covered by base station 3, and so on.

The installation of base stations in a chain topology is also applicable to other scenarios, such as express highways. Normally, the base stations stay in the started state.

During the research and practice of the prior art, the inventor of the present invention discovers that, in certain circumstances, for example, when no service accesses to a base station during the operation and maintenance or night running of a high-speed train, and as a result, electric power resources are wasted during the period of time.

### SUMMARY

Embodiments of the present invention provide a method and a device for controlling base station power, which can control power of a base station and thereby implementing rational utilization of resources.

The embodiments of the present invention can be implemented through the following technical solutions:

A method for controlling base station power is provided, including:
acquiring traffic volumes of a primary site and a secondary site associated with the primary site, where the primary site and the secondary site are obtained by categorizing base stations according to a preset policy; and
controlling, according to the traffic volumes of the primary site and the secondary site associated with the primary site, power of the secondary site associated with the primary site.

Another method for controlling base station power is provided, including:
receiving an instruction sent by an operation and maintenance device or another base station, where the another base station is a primary site associated with a local site, or another secondary site associated with the primary site associated with the local site; and
controlling, according to an indication of the instruction, power of the local site and/or power of the secondary site associated with the local site, where the indication of the instruction is determined according to traffic volumes of the primary site and the secondary site associated with the primary site.

A network device is further provided, including:
an acquiring unit, configured to acquire traffic volumes of a primary site and a secondary site associated with the primary site, where the primary site and the secondary site are obtained by categorizing base stations according to a preset policy; and
a controlling unit, configured to control, according to the traffic volumes of the primary site and the secondary site associated with the primary site which are acquired by the acquiring unit, power of the secondary site associated with the primary site.

A base station is provided, including:
a receiving unit, configured to receive an instruction sent by an OM or another base station, where the another base station is a primary site associated with a local site, or another secondary site associated with the primary site associated with the local site; and
a processing unit, configured to control, according to an indication of the instruction received by the receiving unit, power of the local site and/or power of the secondary site associated with the local site, where the indication of the instruction is determined according to traffic volumes of the primary site and the secondary site associated with the primary site.

In the embodiments of the present invention, traffic volumes of a primary site and a secondary site associated with the primary site are acquired, and power of the secondary site associated with the primary site is controlled according to the traffic volumes, so that the power of base stations is controlled flexibly and that resources are utilized rationally.

### BRIEF DESCRIPTION OF DRAWINGS

FIG. 1a is a schematic diagram of base stations in a high-speed railway scenario;

FIG. 1b is a flowchart of a method for controlling base station power according to an embodiment of the present invention;

FIG. 2 is another flowchart of a method for controlling base station power according to an embodiment of the present invention;

FIG. 3 is still another flowchart of a method for controlling base station power according to an embodiment of the present invention;

FIG. 4a is a schematic diagram of base stations in a high-speed railway scenario;

FIG. 4b is still another flowchart of a method for controlling base station power according to an embodiment of the present invention;

FIG. 5 is still another flowchart of a method for controlling base station power according to an embodiment of the present invention;

FIG. 6a is a schematic structural diagram of an operation and maintenance device according to an embodiment of the present invention;

FIG. 6b is another schematic structural diagram of an operation and maintenance device according to an embodiment of the present invention; and

FIG. 7 is a schematic structural diagram of a base station according to an embodiment of the present invention.

### DESCRIPTION OF EMBODIMENTS

To make the objectives, technical solutions, and advantages of the present invention clearer, the following describes the technical solutions of the present invention in detail with reference to the accompanying drawings and specific embodiments.

The embodiments of the present invention provide a method and a device for controlling base station power, which are respectively described in detail hereinafter.

The following embodiment is a method embodiment of the present invention. The embodiment is described from the perspective of a network device which may specifically be an operation and maintenance device (OM, Operating & Maintaining) or a base station. Base stations may be categorized into primary sites and secondary sites according to a preset policy, and an association between primary sites and secondary sites may be stored in the OM and/or primary sites and/or secondary sites. For example, the OM stores which primary site one or multiple secondary sites are associated with. The association may refer to a mapping between primary sites and secondary sites. One primary site may be mapped to at least one secondary site. A primary site may directly or indirectly control the startup or shutdown of secondary sites associated therewith (for example, the primary site instructs only secondary site A associated therewith to start up or shut down, and upon reception of the instruction, secondary site A transfers the instruction to next secondary site B, and so on, which is an indirect way, where the primary site does not instruct a secondary site directly but delivers an instruction through other devices); the secondary sites receive direct and indirect control of the primary site associated therewith. In specific practice, the association between primary sites and secondary sites may be recorded in a mapping table and stored in the OM for easy management. Of course, if power control is performed by the primary site, the association also needs to be stored on the primary site. In addition, the association may be stored on the secondary sites. For example, for details, reference may be made to Table 1.

The preset policy may be set according to an practical application requirement. For example, in a high-speed railway application scenario, the base stations at the stations of departure or fixedly some stations along a railway may be set as primary sites and the rest of base stations are set as secondary sites. The primary sites normally stay in the started state and the secondary sites stay in the shutdown state.

A method for controlling base station power includes: acquiring traffic volumes of a primary site and a secondary site associated with the primary site; and controlling, according to the traffic volumes of the primary site and the secondary site associated with the primary site, power of the secondary site associated with the primary site.

Referring to FIG. 1b, the specific process may be as follows:

101. Acquire traffic volumes of the primary site and the secondary site associated with the primary site.

In specific practice, the traffic volumes of the primary site and the secondary site may be determined by monitoring numbers of user or radio bearer (RB, Radio Bearer) utilization rates of the primary site and the secondary site. The traffic volume herein refers to service access conditions.

For example, in the case of determining whether there is a service access(that is, whether the traffic volume is 0), if the number of user or RB utilization rate of the primary site is 0, it is determined that no service accesses to the primary site, and likewise, if the number of user or RB utilization rate of the secondary site is 0, it is determined that no service accesses to the secondary site; otherwise, if the number of user or RB utilization rate of the primary site is not 0, it is determined that a service accesses to the primary site, and if the number of user or RB utilization rate of the secondary site is not 0, it is determined that a service accesses to the secondary site; if service accesses to neither the primary site nor the secondary site, the secondary site associated with the primary site is instructed to reduce power; and if a service accesses to the primary site, the secondary site associated with the primary site is instructed to start or reduce power, as detailed in step 102.

102. According to the traffic volumes of the primary site and the secondary site associated with the primary site, control power of the secondary site associated with the primary site. For example, this may specifically be as follows:

When it is determined that the traffic volumes of the primary site and the secondary site associated with the primary site are less than or equal to a first preset threshold, the secondary site associated with the primary site is instructed to reduce power. For example, if the traffic volume is determined to be 0, which means no service accesses, the power may be reduced to 0, which means shutting down the base station, or the power may be reduced to half the original power..

Optionally, the method may further include: when it is determined that the traffic volume of the primary site is greater than a second preset threshold, instructing the secondary site associated with the primary site to start or increase power. The first preset threshold is less than or equal to the second preset threshold.

If it is determined that the traffic volumes of the primary site and the secondary site associated with the primary site are between the first preset threshold and the second preset threshold, no action is taken or the primary site and the secondary site are instructed to stay in the current state.

The first preset threshold and the second preset threshold may be set according to a preset policy. For example, the first preset threshold may be set to be equal to the second preset threshold and equal to 0. In this case, whether a service accesses to the primary site and the secondary site associated with the primary site is determined, and if no service accesses, the secondary site associated with the primary site is instructed to reduce power; or, if a service is accesses, no action is taken or the primary site and the secondary site are instructed to stay in the current state, or, the secondary site associated with the primary site is instructed to start or increase power.

Optionally, a period of time may also be preset. The secondary site associated with the primary site is instructed to reduce power only when it is determined that the traffic volumes of the primary site and the secondary site associated with the primary site within the preset period of time are less than or equal to the first preset threshold.

When no service accesses within the preset period of time, the secondary site associated with the primary site is instructed to reduce power. For example, the power may be reduced to 0, which means shutting down the base station, or the power may be reduced to half the original power.

For example, when it is detected that numbers of user or RB utilization rates of the primary site and the secondary site associated with the primary site are 0, the secondary site is instructed to reduce power. The power may specifically be power of a radio remote unit (RRU, Radio Remote Unit) or power of a radio frequency unit.

The preset period of time may be set according to an practical application requirement, for example, to 1 hour.

Optionally, the method may further include: controlling power of the primary site according to the traffic volumes of the primary site and the secondary site associated with the primary site.

It should be noted that the network device may specifically be an OM or a base station. If the base station power is controlled by the OM, in step 101, the OM acquires the traffic volumes of the primary site and the secondary site associated with the primary site. If the base station power is controlled by the primary site, in step 101, the primary site acquires the traffic volumes of the primary site and the secondary site associated with the primary site. When the network device is an OM, the OM may control all primary sites and secondary sites in a system. For example, the OM may control, according to the traffic volumes of the primary site and the secondary site associated with the primary site, the power of the secondary site associated with the primary site, but also control the primary site according to the traffic volumes of the primary site and the secondary site associated with the primary site, for example, instruct the primary site to reduce power when no service accesses. The OM may determine the secondary site associated with the primary site by querying an "association between primary sites and secondary sites" stored by itself (the OM). When the network device is a base station and the base station is a primary site, the primary site may control the power of itself and a secondary site associated with it (the primary site). For example, the primary site and the secondary site associated with the primary site may check their numbers of user or RB utilization rates respectively to acquire their traffic volumes and then the primary site acquires the traffic volumes of itself and the secondary site associated with the primary site. For example, the secondary site associated with the primary site may notify the traffic volume to the primary site, or the primary site sends a request to the secondary site associated with the primary site to acquire the traffic volume, and finally the primary site controls, according to the received traffic volume, the power of the secondary site associated with the primary site.

In addition, it should be noted that the "start" and "shutdown" mentioned in the embodiment of the present invention are relative and that the "increase power" and "reduce power" are relative. That is, if the state of a secondary site is currently "shutdown", the secondary site is instructed to start, and if the state of a secondary site is currently "started" but the power is less than normal running power (for example, only 50% of the normal running power), the secondary site is instructed to increase power, for example, to the normal running power. In addition, it should be noted that the power needed after startup of the base station may be set according to the practical application requirement.

As seen above, in this embodiment, the traffic volumes of a primary site and a secondary site associated with the primary site are acquired and the power of the secondary site associated with the primary site is controlled according to the traffic volumes, for example, when the traffic volume of a base station is less than or equal to the first preset threshold, the power of the base station is reduced, and when the traffic volume of the base station is greater than the second threshold, the base station is started or the power of the base station is increased, thereby implementing overall flexible control of the power of base stations and rational utilization of resources.

On the basis of the above method embodiment, further, fixed time of start or power increasing and power reducing may be set, and then in other periods of time, the start or power increasing and power reducing of the secondary site are controlled by using the method provided in the foregoing embodiment. That is, before acquiring the traffic volumes of the primary site and the secondary site associated with the primary site in step 101, the method may further include a step of "determining that the current time is within a preset period of management time", as detailed in step 100.

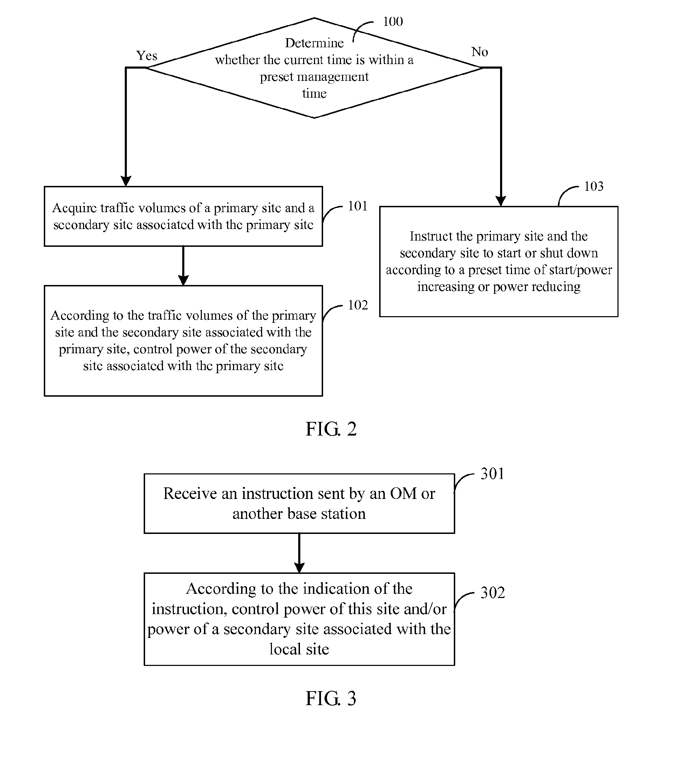

Referring to FIG. 2, the specific process may be as follows:

100. Determine whether the current time is within a preset management time, if the current time is within the preset management time, perform step 101 to monitor the traffic volumes of the primary and secondary sites, if the current time is not within the preset management time, perform step 103.

The preset management time may be set according to an practical application requirement. For example, it is set to be within the running time of high-speed trains.

Steps 101 and 102 are not repeated herein. For details, reference may be made to the foregoing method embodiment.

103. Instruct the primary site and secondary site to start or increase power according to the preset time of start or power increasing, and/or, instruct the primary site and secondary site to reduce power according to the preset time of power reducing, for example, the power may be reduced to 0, which means shutting down the base station, or the power may be reduced to half the original power.

The preset time of start or power increasing and the power reducing may be set according to practical application requirements. For example, the running time of high-speed trains is 6:00 a.m. to 00:00 midnight, and it may be so set as to start the primary site and secondary site or increase the power of the primary site and secondary site at 6:00 a.m. and reduce the power of the primary site and the secondary site (for example, shut down the primary site and secondary site) at 00:00 midnight; and in other periods of time, that is, 6:00 a.m. to 00:00 midnight, the start or power increasing and power reducing of the secondary site are controlled by using the method in the foregoing embodiment.

As seen above, in addition to achieving the beneficial effect of the foregoing embodiment, in this embodiment, because the time of start or power increasing and the power reducing of the primary site and secondary site can be set according to practical application requirements, for example, base stations along a railway are shut down when high-speed trains do not run, resources can be utilized more rationally and electrical power resources are saved.

The following embodiment is another method embodiment of the present invention. This embodiment is described from the perspective of a primary site and a secondary site. First, base stations are categorized into primary sites and secondary sites according to a preset policy and an association between the primary sites and the secondary sites is stored in an OM.

A method for controlling base station power includes: receiving an instruction sent by the OM or another base station and controlling the power of a base station according to the indication of the instruction.

Referring to FIG. 3, the specific process may be as follows:

301. Receive an instruction sent by the OM or another base station, where the another base station is a primary site associated with it (that is, a local site) or another secondary site associated with the primary site associated with the local site. This means that, if the executor of step 301 is a secondary site, the secondary site may directly receive an instruction sent by the primary site or the OM or receive an instruction sent by the primary site or the OM and forwarded by another secondary site; if the executor of step 301 is the primary site, the primary site may receive an instruction sent by the OM. The specific format of the instruction is as follows:
{
Double RRUPowerRatio; /*RRU power decrease value, where Ratio specifically is the ratio of a difference between the RRU power and the maximum power to the maximum power and ranges from 0 to 100%, where 0 means that the RRU power does not change and 100% means that the RRU power is reduced to 0 or the RRU power is increased to the maximum power value*/
Enumerate ReduceOrAddIndx; /*indication of reducing or increasing power, where 0 means reducing power, 1 means increasing power, and Enumerate means enumeration*/
}

Double is the data type, indicating a double precision floating point format, and data types other than Double may also be adopted according to the practical application requirement, which will not be repeated herein.

The indication of the instruction depends on the traffic volumes of the primary site and the secondary site and a specific example is as follows:

The traffic volumes of the primary site and the secondary site associated with the primary site are acquired. If the traffic volumes are greater than the second preset threshold, the secondary site associated with the primary site is instructed to start or increase power. If the traffic volumes are less than or equal to the first preset threshold within a preset time, the secondary site associated with the primary site is instructed to reduce power.

302. According to the indication of the instruction, control power of itself (that is, a local site) and/or power of the secondary site associated with the local site.

For example:

If the executor of step 301 is a secondary site, and if the instruction received by the secondary site indicates startup of the base station or increase of base station power, the secondary site is started or increases power; if the instruction received by the secondary site indicates shutdown of the base station or reduction of base station power, the secondary site reduces power (power of the secondary site itself), for example, the power is reduced to 0, which means shutting down the base station.

If the executor of step 301 is a primary site, and if the instruction received by the primary site indicates startup of the base station or increase of base station power, the primary site starts itself (the primary site) and the secondary site associated with the primary site, or increases power of itself (the primary site) and the secondary site associated with the primary site; if the instruction received by the primary site indicates shutdown of the base station or reduction of base station power, the primary site reduces the power of itself (the primary site) and the secondary site associated with the primary site.

The power herein is specifically power of the RRU or radio frequency unit.

It should be noted that the "start" and "shutdown" mentioned herein are relative and that the "increase power" and "reduce power" are relative. That is, if the state of a secondary site is currently "shutdown", the secondary site is instructed to start, and if the state of a secondary site is currently "started" but the power is less than normal running power (for example, only 50% of the normal running power), the secondary site is instructed to increase power, for example, to the normal running power.

As seen above, in this embodiment, the base stations may be flexibly controlled according to their traffic volumes. For example, when the traffic volume of a base station is greater than the second preset threshold, the base station is started or the power of the base station is increased; when the traffic volume of the base station is less than or equal to the first preset threshold, the power of the base station is reduced, thereby implementing flexibly control of the base station power, and rational utilization of resources.

The following embodiment is another method embodiment of the present invention. This embodiment is described in detail with reference to a specific example and the method described in the foregoing method embodiment.

First, all base stations are categorized into a number of primary sites and a number of secondary sites according to a preset policy, where one primary site may be associated with at least one secondary site and the association between the primary sites and the secondary sites is stored in an OM for easy management. The primary sites normally stay in the started state and the secondary sites stay in the shutdown state.

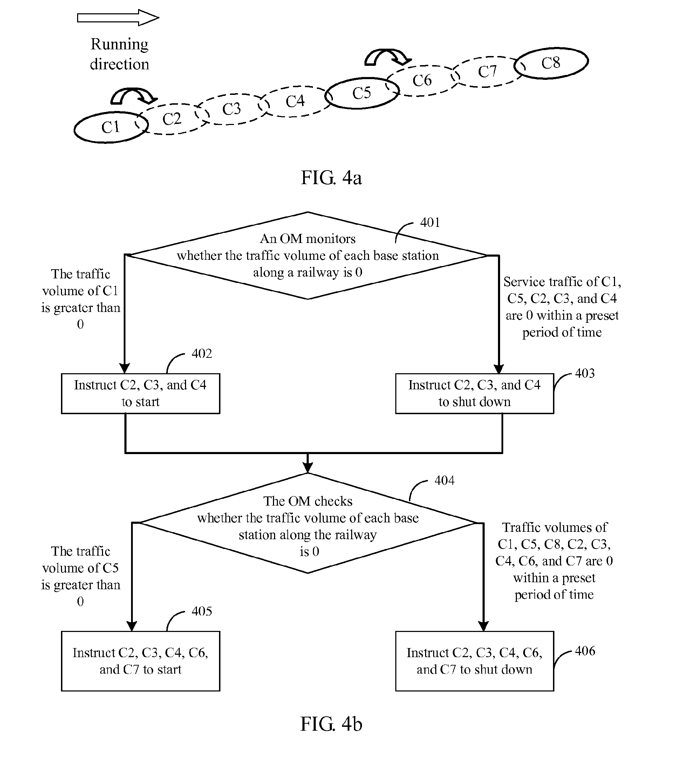

For example, in a high-speed railway application scenario, the base stations at the stations of departure or fixedly some stations along a railway may be set as primary sites, such as C1, C5, and C8 in FIG. 4a (the solid lines in the figure), and the rest are secondary sites, such as C2, C3, C4, C6, C7 and C8 in FIG. 4a (the dashed lines in the figure). To ensure successful access of services, the primary sites may be set to be never shut down or shut down for only a short time and the secondary sites may be started by the OM according to the traffic volumes provided by the primary sites and shut down according to the traffic volumes provided by the base stations (including the primary sites and the secondary sites).

An association between the primary sites and the secondary sites also needs to be stored. For example, an association table between the primary sites and the secondary sites may be stored in the OM, as shown in Table 1:

**Table 1**

| | | | |
|---|---|---|---|
| Primary sites | C1 | C5 | C8 |
| Secondary sites | C2, C3, and C4 | C2, C3, C4, C6, and C7 | C6 and C7 |

As seen from Table 1, secondary sites associated with the primary site C1 include C2, C3, and C4.

Secondary sites associated with the primary site C5 include C2, C3, C4, C6, and C7.

Secondary sites associated with the primary site C8 include C6 and C7.

Therefore, the OM can control all base stations along the railway. For example, when the first preset threshold and the second threshold are both 0 (no service accesses), as shown in FIG. 4b, a specific process may be as follows:

401. When a train departs from the primary site C1, the OM monitors whether the traffic volume of each base station along the railway is 0, that is, whether a service accesses; if the OM detects that a service accesses to the primary site C1, step 402 is performed, or otherwise, if the OM detects that no service accesses to the primary sites C1 and C5 or the secondary sites C2, C3, and C4 within the preset time, step 403 is performed.

For example, the OM may monitor the number of user or RB utilization rate of the primary site C1; if the number of user or RB utilization rate is 0, the OM determines that no service accesses; if the number of user or RB utilization rate is not 0, the OM determines that a service accesses.

The preset time may be set according to an practical application requirement, for example, to 1 hour or others. This may specifically be implemented by setting a timer. For example, when the OM detects that no service accesses to the primary site C1 or the secondary sites C2, C3, and C4, the timer is started, and if no service accesses to the primary site C1 or the secondary sites C2, C3, and C4 before the timer expires, step 403 is performed; if a service accesses to at least one cell of the primary site C1 and the secondary sites C2, C3, and C4, the timer is reset and shut down.

It should be noted that, a backhaul network along the railway is a non-GSM network, such as a wideband code division multiple access (WCDMA, Wideband Code Division Multiple Access) or long term evolution (LTE, Long Term Evolution) network. When the train is started, no matter whether a user terminal accesses (for example, the user terminal originates a call), the backhaul network accesses the core network directly, and therefore, the OM detects a service access to the base station. This means, when the train first departs from the primary site C1, a service access is normally detected. If no backhaul network is available along the railway, the terminal accesses to a base station directly, and in this case, a device similar to a test terminal may be accesses to the base station when the train is started, in order to ensure that the OM may detect a service access and start associated secondary sites when the train is first started, so that normal communication is guaranteed when the train runs to these secondary sites.

402. When the OM determines that the traffic volume of the primary site C1 is greater than 0, which means a service accesses, the OM instructs the secondary sites C2, C3, and C4 associated with the primary site C1 to start and then step 404 may be performed.

The OM may determine the secondary site associated with the primary site according to the "association table between primary sites and secondary sites" stored by itself (the OM).

If the secondary sites C2, C3, and C4 are already started and are currently in a normal working state, C2, C3, and C4 may just stay in the current state.

403. When it is determined that the traffic volumes of the primary sites C1 and C5 and the secondary sites C2, C3, and C4 in the preset time are all 0, which means that no service accesses, instruct the secondary sites C2, C3, and C4 to shut down and then step 404 may be performed.

It should be noted that, if the secondary sites C2, C3, and C4 are already in the shutdown state at the time, C2, C3, and C4 may just stay in the current state.

404. When the train arrives at C5, the OM monitors all base stations along the railway again, and if the OM detects that the traffic volume of the primary site C5 is greater than 0, which means a service accesses, step 405 is performed, or otherwise, if the OM detects that the traffic volumes of the primary sites C1, C5, and C8, and the secondary sites C2, C3, C4, C6, and C7 are all 0, which means that no service accesses, step 405 is performed.

405. When the OM determines that the traffic volume of the primary site C5 is greater than 0, which means a service is accessed, the OM instructs the secondary sites C2, C3, C4, C6, and C7 associated with the primary site C5 to start and then step 407 is performed.

It should be noted that, if the secondary sites C2, C3, C4, C6, and C7 are already started and are currently in a normal working state, C2, C3, C4, C6, and C7 may just stay in the current state. For example, if the secondary sites C2, C3, and C4 are started in step 402, only C6 and C7 need to be instructed at the time.

406. When it is determined that the traffic volumes of the primary sites C5, C1 and C8 and the secondary sites C2, C3, C4, C6, and C7 in the preset time are all 0, which means that no service accesses, instruct the secondary sites C2, C3, C4, C6, and C7 to shut down and then step 407 is performed.

It should be noted that, if the secondary sites C2, C3, C4, C6, and C7 are already in the shutdown state at the time, C2, C3, C4, C6, and C7 may just stay in the current state.

When the train arrives at C8, the OM performs a step like step 404 which will not be repeated herein.

It should be noted that in the above description, the startup and shutdown of base stations are used as an example. It should be understood that the base stations may not be started or shut down but their power is adjusted. For example, when no service accesses, the RRU power of a base station is reduced, for example, to a proportion such as 50% of the maximum RRU power; when a service accesses, the normal power state is restored, for example, to the maximum RRU power.

As seen above, in this embodiment, the base stations are controlled according to the traffic volumes of the base stations. Therefore, when the traffic volume of a primary site is greater than 0, which means a service accesses, the secondary sites associated with the primary site are started or the power of the secondary sites associated with the primary site is increased; when the traffic volumes of a primary site and the secondary sites associated with the primary site are 0, which means no service accesses, the power of the secondary sites associated with the primary site is shut down, thereby implementing flexible control of the sites and rational utilization of resources. For example, the solution may specifically be applied to a high-speed railway application scenario. As known to all, because of the high speed feature of high-speed trains, the operation and maintenance of high-speed trains is needed often. During the operation and maintenance period, no service accesses to the base stations along the railway. Therefore, if the solution is adopted, the base stations along the railway can be flexibly controlled, so that the base stations are shut down when no service accesses, and therefore, a lot of electrical power resources can be saved.

Further, fixed start time and shutdown time may be set for each base station, and in other periods of time, the start and shutdown of secondary sites are controlled by using the method provided in the foregoing method embodiment.

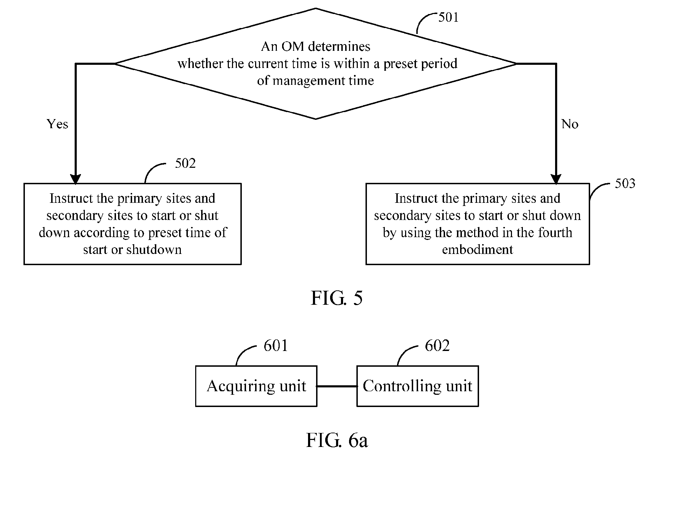

As shown in FIG. 5, the specific process may be as follows:

501. The OM determines whether the current time is within the preset management time; if not, step 502 is performed, or if so, step 503 is performed.

For example, the management time may be set to the running time of high-speed trains, for example, 6:00 a.m. to 00:00 midnight. Then, if the current time is 7:00, step 503 is performed, or if the current time is 4:00 a.m., step 502 is performed.

502. Instruct the primary sites and secondary sites to start or shut down according to the preset start or shutdown time.

The preset time of start or shutdown may be set according to an practical application requirement. For example, if the running time of high-speed trains is 6:00 a.m. to 00:00 midnight, it may be so set as to start the primary sites and secondary sites at 6:00 a.m. and shut down the primary sites and secondary sites at 00:00 midnight. In other periods of time, namely, 6:00 a.m. to 00:00 midnight, the start and shutdown of secondary sites are controlled by using the method in the foregoing embodiment.

503. Instruct the primary sites and secondary sites to start or shut down by using the method in the foregoing embodiment, specifically steps 401 to 406 in the foregoing embodiment, which are not repeated herein.

As seen above, the embodiment can not only achieve the beneficial effect of the foregoing method embodiment but also further save electrical power resources because the start and shutdown time of primary sites and secondary sites can be set according to practical application requirements, for example, the base stations along a railway are shut down in non-running hours of high-speed trains.

An embodiment of the present invention further provides a network device, which may specifically be an operation and maintenance device (OM) or a base station. As shown in FIG. 6a, the network device includes an acquiring unit 601 and a controlling unit 602.

The acquiring unit 601 is configured to acquire traffic volumes of a primary site and a secondary site associated with the primary site, where the primary site and the secondary site are obtained by categorizing base stations according to a preset policy. Details are not repeated herein. For details, reference may be made to the foregoing method embodiments.

The controlling unit 602 is configured to control, according to the traffic volumes of the primary site and the secondary site associated with the primary site which are acquired by the acquiring unit 601, power of the secondary site associated with the primary site.

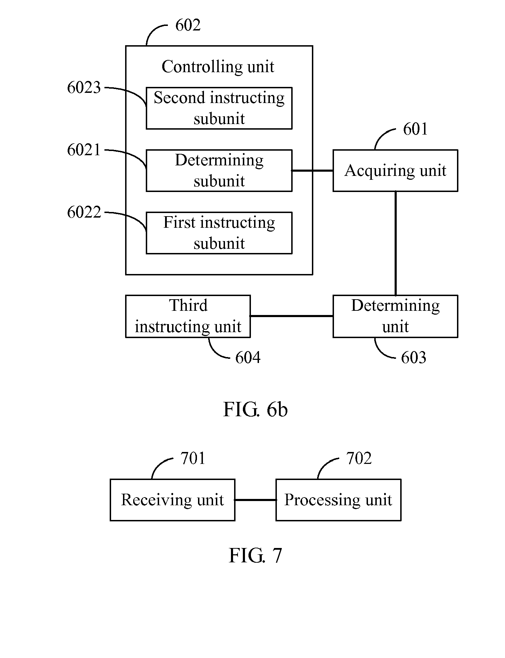

As shown in FIG. 6b, the controlling unit 602 may include a determining subunit 6021 and a first instructing subunit 6022.

The determining subunit 6021 is configured to determine whether the traffic volumes of the primary site and the secondary site associated with the primary site are less than or equal to a first preset threshold.

The first instructing subunit 6022 is configured to instruct the secondary site associated with the primary site to reduce power, when the determining subunit 6021 determines that the traffic volumes of the primary site and the secondary site associated with the primary site are less than or equal to the first preset threshold. For example, the power may be reduced to 0, which means shutting down the base station, or the power may be reduced to half the original power.

Optionally, the network device may further include a second instructing subunit 6023.

The determining subunit 6021 is further configured to determine whether the traffic volume of the primary site is greater than a second preset threshold.

The second instructing subunit 6023 is configured to instruct the secondary site associated with the primary site to start or increase power, when the determining subunit 6021 determines that the traffic volume of the primary site is greater than the second preset threshold.

The first preset threshold is less than or equal to the second preset threshold. The first preset threshold and the second preset threshold may be set according to a preset policy. For example, the two thresholds may generally be set to 0. To be specific, whether there is a service accesses to the primary site and the secondary site associated with the primary site is determined, and if the traffic volumes are greater than 0, a service accesses, or if the traffic volumes are smaller than or equal to 0, no service accesses. If the acquiring unit 601 detects that no service accesses to either the primary site or the secondary site, the first instructing subunit 6022 instructs the secondary site to reduce power; if the acquiring unit 601 detects that a service accesses to the primary site, the second instructing subunit 6023 instructs the secondary site associated with the primary site to start or increase power.

It should be noted that the "start" and "shutdown" mentioned in the embodiment of the present invention are relative and that the "increase power" and "reduce power" are relative. That is, if the state of a secondary site is currently "shutdown", the secondary site is instructed to start, and if the state of a secondary site is currently "started" but the power is less than normal running power (for example, only 50% of the normal running power), the secondary site is instructed to increase power, for example, to the normal running power. In addition, it should be noted that the power needed after startup of the base station may be set according to the practical application requirement.

Optionally, a period of time may be preset. The secondary site associated with the primary site is instructed to reduce power only when it is determined that the traffic volumes of the primary site and the secondary site associated with the primary site within the preset period of time are less than or equal to the first preset threshold. That is:

The determining subunit 6021 is specifically configured to determine whether the traffic volumes of the primary site and the secondary site associated with the primary site are less than or equal to the first preset threshold within a preset period of time; and
the first instructing subunit 6022 is specifically configured to instruct the secondary site associated with the primary site to reduce power, when the determining subunit 6021 determines that the traffic volumes of the primary site and the secondary site associated with the primary site are less than or equal to the preset threshold within the preset period of time.

The acquiring unit 601 is specifically configured to determine the traffic volumes of the primary site and the secondary site by monitoring numbers of user or RB utilization rates of the primary site and the secondary site.

For example, in the case of determining whether a service accesses, if the number of user or RB utilization rate of the primary site is 0, it is determined that no service accesses to the primary site, and likewise, if the number of user or RB utilization rate of the secondary site is 0, it is determined that no service accesses to the secondary site; otherwise, if the number of user or RB utilization rate of the primary site is not 0, it is determined that a service accesses to the primary site, and if the number of user or RB utilization rate of the secondary site is not 0, it is determined that a service accesses to the secondary site.

Then, the second instructing subunit 6023 is specifically configured to instruct the secondary site associated with the primary site to start or increase power, when the acquiring unit 601 detects that the number of user or RB utilization rate of the primary site is greater than the second threshold, for example, when the number of user or RB utilization rate is greater than 0.

The first instructing subunit 6022 is specifically configured to instruct the secondary site to reduce power, when the monitoring unit 601 detects that numbers of user or RB utilization rates of the primary site and the secondary site associated with the primary site are less than or equal to the first preset threshold within a preset time, for example, when numbers of user or RB utilization rates are 0.

Optionally, the controlling unit 602 is further configured to control the power of the primary site according to the traffic volumes of the primary site and the secondary site associated with the secondary site which are acquired by the acquiring unit 601. Details are not repeated herein. For details, reference may be made to the foregoing method embodiments.

Further, fixed time of start or power increasing and power reducing may be set for the primary site and the secondary site, and then in other periods of time, controlling is performed according to the traffic volumes of the base stations. This means that, as shown in FIG. 6b, the network device may further include a determining unit 603.

The determining unit 603 is configured to determine whether the current time is within a preset management time.

The preset management time, preset time of start or power increasing, and power reducing may be set according to the practical application requirement.

Then, the acquiring unit 601 is further configured to monitor the traffic volumes of the primary site and the secondary site when the determining unit 603 determines that the current time is within the preset management time.

As shown in FIG. 6b, the operation and maintenance device may further include a third instructing unit 604.

The third instructing unit 604 is configured to: when the determining unit 603 determines that the current time is not within the preset management time, instruct the primary site and the secondary site to start or increase power according to the preset time of start or power increasing, and/or instruct the primary site and the secondary site to reduce power according to the preset time of power reducing.

The specific implementation of the above units is not repeated herein. For details, reference may be made to the foregoing method embodiments. Details are not repeated herein.

As seen above, the controlling unit 602 of the network device in this embodiment can flexibly control the power of a base station according to the traffic volume of the base station. For example, when the traffic volume of the primary site is greater than the second preset threshold, the second instructing subunit 6023 instructs the base station to start the base station or increase the power of the base station; and when the traffic volumes of the primary site and the secondary site are less than or equal to the second preset threshold, the first instructing subunit 6022 instructs the base station to reduce the power of the base station, thereby utilizing resources rationally.

Accordingly, an embodiment of the present invention further provides a base station. As shown in FIG. 7a, the base station includes a receiving unit 701 and a processing unit 702.

The receiving unit 701 is configured to receive an instruction sent by an OM or another base station, where the another base station is a primary site associated with a local site, or another secondary site associated with the primary site associated with the local site.

This means that, when the local site is a primary site or a secondary site, the instruction may be sent by the OM according to the traffic volumes of the base stations. For example, this may specifically be as follows:

The OM monitors the traffic volumes of the primary site and the secondary site associated with the primary site, and if it is determined that the traffic volume of the primary site is greater than a second preset threshold, instructs the secondary site associated with the primary site to start or increase power, and if it is determined that the traffic volumes of the primary site and the secondary site associated with the primary site are less than or equal to a first preset threshold within a preset time, instructs the secondary site associated with the primary site to reduce power.

When the base station is a secondary site, the instruction may be sent by a primary site associated with the secondary site. For example, this may specifically be as follows:

The primary site and the secondary site associated with the primary site acquire their traffic volumes respectively by checking their numbers of user or RB utilization rates. Then the secondary site notifies the traffic volume to the primary site associated with the secondary site, and the primary site controls, according to the received traffic volume, the power of the secondary site associated with the primary site. For example, when it is determined that the traffic volume of itself (that is, the primary site) is greater than the second preset threshold, the primary site instructs the secondary site associated with the primary site to start or increase power; when it is determined that the traffic volumes of the primary site and the secondary site associated with the primary site are both less than or equal to the first preset threshold, the primary site instructs the secondary site associated with the primary site to reduce power.

It should be noted that the instruction sent by the OM or the primary site may be sent directly or indirectly. For example, the OM may instruct the primary site and the primary site then instructs the other secondary sites associated with the primary site; or, the OM or the primary site may instruct one of the secondary sites and the secondary site receiving the instruction then instructs other secondary sites.

The processing unit 702 is configured to control, according to an indication of the instruction received by the receiving unit 701, power of the local site and/or power of the secondary site associated with the local site. Specifically, if the base station is a primary site, the processing unit 702 may control, according to the indication of the instruction received by the receiving unit 701, the power of the primary site itself and the power of the secondary site associated with the primary site; and if the base station is a secondary site, the processing unit 702 may control the power of the secondary site itself according to the indication of the instruction received by the receiving unit 701.

The processing unit 701 may include a first processing subunit and a second processing subunit.

The first processing subunit is configured to reduce the base station power when the instruction received by the receiving unit 701 indicates shutdown of the base station or reduction of base station power. For example, the power may be reduced to 0, which means shutting down the base station, or the power may be reduced to half the original power.

The second processing subunit is configured to start the base station or increase the base station power when the instruction received by the receiving unit 701 indicates startup of the base station or increase of base station power.

It should be noted that the "start" and "shutdown" mentioned herein are relative and that the "increase power" and "reduce power" are relative. That is, if the state of a secondary site is currently "shutdown", the secondary site is instructed to start, and if the state of a secondary site is currently "started" but the power is less than normal running power (for example, only 50% of the normal running power), the secondary site is instructed to increase power, for example, to the normal running power. In addition, it should be noted that the power needed after startup of the base station may be set according to the practical application requirement.

The specific implementation of the above units is not repeated herein. For details, reference may be made to the foregoing method embodiments.

As seen above, the receiving unit 701 of the base station in this embodiment can receive the instruction sent by the OM according to the traffic volume of the base station and then the processing unit 702 controls the power of the base station according to the indication of the received instruction. For example, when the traffic volume of the base station is greater than 0, the second processing subunit starts the base station or increases the power of the base station, and when the traffic volume of the base station is smaller than 0, the first processing subunit reduces the power of the base station, thereby implementing flexible control of the power of the base stations and rational utilization of resources.

Accordingly, an embodiment of the present invention further provides a communication system, including any network device and any base station provided in the embodiments of the present invention.

The network device is configured to acquire traffic volumes of a primary site and a secondary site associated with the primary site, and control, according to the traffic volumes of the primary site and the secondary site associated with the primary site, power of the secondary site associated with the primary site; for example, when it is determined that the traffic volumes of the primary site and the secondary site associated with the primary site are less than or equal to a first preset threshold, instruct the secondary site to reduce power, for example, the power may be reduced to 0, which means shutting down the base station, or the power may be reduced to half the original power; and the network device is further configured to instruct the secondary site associated with the primary site to start or increase power when it is determined that the traffic volume of the primary site is greater than a second preset threshold.

The base station, which serves as a secondary site, is configured to receive an instruction sent by an operation and maintenance device (OM) or another base station; control the base station power according to an indication of the instruction, for example, reduce the power of the base station if the instruction indicates reducing of power of the base station; and start the base station or increase the power of the base station if the instruction indicates startup of the base station or increase of power of the base station.

The first preset threshold is less than or equal to the second preset threshold. The first preset threshold and the second preset threshold may be set according to a preset policy, for example, generally set to 0. To be specific, whether there is a service access to the primary site and the secondary site associated with the primary site is determined; if the operation and maintenance device detects that no service accesses to either the primary site or the secondary site, it instructs the base station which is the secondary site to reduce power; if the operation and maintenance device detects that a service accesses to the primary site, the second instructing unit 603 instructs the secondary site associated with the primary site to start or increase power.

The specific implementation of the communication system is not repeated herein. For details, reference may be made to the foregoing method and network device embodiments.

The communication system may be applied to scenarios where a chain topology is adopted for the installation of base stations, such as high-speed railways and express highways.

As seen above, the network device of the communication system in this embodiment can flexibly control power of the base station according to the traffic volume of the base station. For example, when the traffic volume of the base station is greater than the second preset threshold, the network device starts the base station or increases the power of the base station, and when the traffic volume of the base station is less than or equal to the first threshold, the network device reduces the power of the base station. With the solution, rational utilization of resources may be implemented.

Persons of ordinary skill in the art understand that all or a potion of the steps in the methods provided in the foregoing embodiments may be implemented by hardware under the instruction of a program. This program may be stored in a computer readable storage medium, such as a read-only memory (ROM, Read Only Memory), a random access memory (RAM, Random Access Memory), a magnetic disk, or a CD-ROM.

The method and device for controlling base station power according to the embodiments of the present invention are described in detail above. The principle and implementation of the present invention are described herein through specific examples. The description about the embodiments of the present invention is merely provided for ease of understanding of the method and core ideas of the present invention. Persons of ordinary skill in the art can make variations and modifications to the present invention in terms of the specific implementations and application scopes according to the ideas of the present invention. Therefore, the specification shall not be construed as a limit to the present invention.

## Claims

1. A method for controlling base station power, comprising:
acquiring traffic volumes of a primary site and a secondary site associated with the primary site, wherein the primary site and the secondary site are obtained by categorizing base stations according to a preset policy; and
controlling, according to the traffic volumes of the primary site and the secondary site associated with the primary site, power of the secondary site associated with the primary site.

2. The method according to claim 1, wherein the controlling, according to the traffic volumes of the primary site and the secondary site associated with the primary site, power of the secondary site associated with the primary site comprises:
instructing the secondary site associated with the primary site to reduce the power when determining that the traffic volumes of the primary site and the secondary site associated with the primary site are less than or equal to a first preset threshold.

3. The method according to claim 1, wherein the controlling, according to the traffic volumes of the primary site and the secondary site associated with the primary site, power of the secondary site associated with the primary site comprises:
instructing the secondary site associated with the primary site to start or increase the power when determining that the traffic volume of the primary site is greater than a second preset threshold.

4. The method according to claim 2, wherein the determining that the traffic volumes of the primary site and the secondary site associated with the primary site are less than or equal to a first preset threshold comprises:
determining that the traffic volumes of the primary site and the secondary site associated with the primary site are less than or equal to the first preset threshold within a preset period of time.

5. The method according to any one of claims 1 to 4, wherein the acquiring traffic volumes of the primary site and the secondary site associated with the primary site comprises:
determining, by an operation and maintenance device, the traffic volumes of the primary site and the secondary site associated with the primary site by monitoring numbers of user or radio bearer utilization rates of the primary site and the secondary site associated with the primary site; and
the controlling, according to the traffic volumes of the primary site and the secondary site associated with the primary site, power of the secondary site associated with the primary site comprises: controlling, by the operation and maintenance device according to the traffic volumes of the primary site and the secondary site associated with the primary site, the power of the secondary site associated with the primary site.

6. The method according to any one of claims 1 to 4, wherein the acquiring traffic volumes of the primary site and the secondary site associated with the primary site comprises:
obtaining, by the primary site and the secondary site associated with the primary site, their traffic volumes respectively by checking their numbers of user or radio bearer RB utilization rates, and acquiring, by the primary site, the traffic volumes of the primary site and the secondary site associated with the primary site; and
the controlling, according to the traffic volumes of the primary site and the secondary site associated with the primary site, power of the secondary site associated with the primary site comprises: controlling, by the primary site according to the received traffic volumes, the power of the secondary site associated with the primary site.

7. The method according to any one of claims 1 to 6, further comprising:
controlling power of the primary site according to the traffic volumes of the primary site and the secondary site associated with the primary site.

8. The method according to any one of claims 1 to 7, wherein, before the acquiring traffic volumes of the primary site and the secondary site associated with the primary site, the method further comprises:
determining that current time is within a preset period of management time.

9. The method according to claim 8, further comprising:
if the current time is not within the preset management time, instructing the primary site and the secondary site associated with the primary site to start or increase power according to a preset time of start or power increasing, and/or, instructing the primary site and the secondary site associated with the primary site to reduce power according to a preset time of power reducing.

10. The method according to claim 2, wherein the determining that the traffic volumes of the primary site and the secondary site associated with the primary site are less than or equal to a first preset threshold comprises:
no service accesses to either the primary site or the secondary site associated with the primary site; and
the instructing the secondary site associated with the primary site to reduce power comprises: shutting down the secondary site associated with the primary site.

11. A method for controlling base station power, comprising:
receiving an instruction sent by an operation and maintenance device or another base station, wherein the another base station is a primary site associated with a local site, or another secondary site associated with a primary site associated with the local site; and
controlling, according to an indication of the instruction, power of the local site and/or power of the secondary site associated with the local site, wherein the indication of the instruction is determined according to traffic volumes of the primary site and the secondary site associated with the primary site.

12. A network device, comprising:
an acquiring unit, configured to acquire traffic volumes of a primary site and a secondary site associated with the primary site, wherein the primary site and the secondary site are obtained by categorizing base stations according to a preset policy; and
a controlling unit, configured to control, according to the traffic volumes of the primary site and the secondary site associated with the primary site which are acquired by the acquiring unit, power of the secondary site associated with the primary site.

13. The network device according to claim 12, wherein the controlling unit comprises a determining subunit and a first instructing subunit, wherein:
the determining subunit is configured to determine whether the traffic volumes of the primary site and the secondary site associated with the primary site are less than or equal to a first preset threshold; and
the first instructing subunit is configured to instruct the secondary site associated with the primary site to reduce power, when the determining subunit determines that the traffic volumes of the primary site and the secondary site associated with the primary site are less than or equal to the first preset threshold.

14. The network device according to claim 13, further comprising:
the determining subunit, further configured to determine whether the traffic volume of the primary site is greater than a second preset threshold; and
a second instructing subunit, configured to instruct the secondary site associated with the primary site to start or increase power, when the determining subunit determines that the traffic volume of the primary site is greater than the second preset threshold.

15. The network device according to claim 13, wherein:
the determining subunit is specifically configured to determine whether the traffic volumes of the primary site and the secondary site associated with the primary site are less than or equal to the first preset threshold within a preset period of time; and
the first instructing subunit is specifically configured to instruct the secondary site associated with the primary site to reduce power, when the determining subunit determines that the traffic volumes of the primary site and the secondary site associated with the primary site are less than or equal to the first preset threshold within the preset period of time.

16. The network device according to any one of claims 12 to 15, wherein:
the acquiring unit is specifically configured to determine the traffic volumes of the primary site and the secondary site associated with the primary site by monitoring numbers of user or radio bearer utilization rates of the primary site and the secondary site.

17. The network device according to any one of claims 12 to 16, wherein:
the controlling unit is further configured to control power of the primary site according to the traffic volumes of the primary site and the secondary site associated with the primary site which are acquired by the acquiring unit.

18. The network device according to any one of claims 12 to 17, further comprising a determining unit, wherein:
the determining unit is configured to determine whether current time is within a preset management time; and
the acquiring unit is further configured to acquire the traffic volumes of the primary site and the secondary site associated with the primary site, when the determining unit determines that the current time is within the preset management time.

19. The network device according to claim 18, further comprising a third instructing unit, wherein:
the third instructing unit is configured to: if the determining unit determines that the current time is not within the preset management time, instruct the primary site and the secondary site associated with the primary site to start or increase power according to a preset time of start or power increasing, and/or, instruct the primary site and the secondary site associated with the primary site to reduce power according to a preset time of power reducing.

20. The network device according to any one of claims 12 to 19, wherein:
the network device is an operation and maintenance device or a base station.

21. A base station, comprising:
a receiving unit, configured to receive an instruction sent by an OM or another base station, wherein the another base station is a primary site associated with a local site, or another secondary site associated with the primary site associated with the local site; and
a processing unit, configured to control, according to an indication of the instruction received by the receiving unit, power of the local site and/or power of the secondary site associated with the local site, wherein the indication of the instruction is determined according to traffic volumes of the primary site and the secondary site associated with the primary site.
